# EUROPÄISCHE PATENTSCHRIFT

(11) **EP 2 598 673 B1**
(45) Veröffentlichungstag und Bekanntmachung des Hinweises auf die Patenterteilung: **19.12.2018**
(21) Anmeldenummer: 11738710.0
(22) Anmeldetag: 29.07.2011
(51) Int. Cl.: C25C 3/08

(54) **VERFAHREN ZUR HERSTELLUNG EINES KATHODENBLOCKS FÜR EINE ALUMINIUM-ELEKTROLYSEZELLE**
PROCESS FOR PRODUCING A CATHODE BLOCK FOR AN ALUMINIUM ELECTROLYSIS CELL
PROCÉDÉ DE PRODUCTION D'UN BLOC CATHODIQUE POUR CELLULE D'ÉLECTROLYSE D'ALUMINIUM

(30) Priorität: 29.07.2010 DE 102010038650
(43) Veröffentlichungstag der Anmeldung: 05.06.2013
(73) Patentinhaber: SGL CFL CE GmbH, 86405 Meitingen (DE)
(72) Erfinder: KUCHER, Martin, 86405 Meitingen (DE); TOMALA,Janusz, PL-47-400 Raciborz (PL); HILTMANN, Frank, 86405 Meitingen (DE)
(86) Internationale Anmeldenummer: PCT/EP2011/063072
(87) Internationale Veröffentlichungsnummer: WO 2012/013767

(56) Entgegenhaltungen:
- EP-A1- 1 564 313
- EP-A1- 2 576 870
- CN-A- 101 158 048
- US-A- 4 308 115
- US-A- 4 376 029

## Beschreibung

Die vorliegende Erfindung betrifft ein Verfahren zur Herstellung eines Kathodenblocks für eine Aluminium-Elektrolysezelle und einen Kathodenblock.

Ein bekanntes Verfahren zur Herstellung von metallischem Aluminium ist der Hall-Heroult-Prozess. Bei diesem elektrolytischen Verfahren wird typischerweise der Boden einer Elektroysezelle von einer Kathodenfläche gebildet, die aus einzelnen Kathodenblöcken besteht. Von unten werden die Kathoden über Stahlbarren kontaktiert, die in entsprechenden länglichen Ausnehmungen in der Unterseite der Kathodenblöcke eingebracht sind.

Die Herstellung von Kathodenblöcken erfolgt herkömmlich durch Mischen von Koks, mit kohlenstoffhaltigen Partikeln, wie Anthrazit, Kohlenstoff oder Graphit, Verdichten und Carbonisieren. Gegebenenfalls schließt sich ein Graphitierschritt bei höheren Temperaturen an, bei denen sich die kohlenstoffhaltigen Partikel und der Koks zumindest teilweise in Graphit umwandeln. Es wird eine Kohlenstoffkathode erhalten, die zumindest teilweise aus Graphit besteht.

Die Lebensdauer der Kathodenblöcke ist durch eine Reihe von Einflüssen begrenzt. Insbesondere Korrosion und Erosion durch flüssiges Aluminium und Elektrolyt, insbesondere Kryolith, zerstören im Laufe der Zeit die Kathodenblöcke von der Oberseite her.

Um die Verschleißbeständigkeit der Kathodenblöcke zu erhöhen, wurden in der Vergangenheit verschiedene Maßnahmen ergriffen. Beispielsweise wurde versucht, die Rohdichte der Kathodenblöcke zu erhöhen, was deren Festigkeit und somit die Verschleißbeständigkeit erhöhen soll. Dabei konnten jedoch lediglich Rohdichten von bis zu 1,68 g/cm³ bei vollgraphitierten, nicht imprägnierten Kathodenblöcken erzielt werden, wodurch die Verschleißbeständigkeit immer noch unter einem Optimum bleibt.

Andererseits wurden Kohlenstoffkathoden mit Titandiborid (TiB₂) beschichtet (beschrieben in der CN 1062008) oder mit einer TiB₂-Kohlenstoff-Mischung beschichtet, wie beispielsweise in der DE 112006004078 beschrieben. TiB₂ kann offensichtlich das Benetzungsverhalten von Aluminium auf der Kathode verbessern und trägt zusätzlich zu einer höheren Härte und Verschleißbeständigkeit bei. Dennoch ist die Verschleißbeständigkeit einer TiB₂-Schicht auf einer Kohlenstoffkathode und einer Kompositschicht aus Kohlenstoff und TiB₂ immer noch zu gering, und somit ist auch die Verschleißbeständigkeit von mit entsprechenden Schichten versehenen Kathodenblöcken zu gering. Weitere aus dem Stand der Technik bekannte Verfahren werden in den Druckschriften US 4 308 115 A, US 4 376 029 A und EP 1 564 313 A1 beschrieben.

Aufgabe der vorliegenden Erfindung ist daher, ein Verfahren zur Herstellung einer kohlenstoffbasierten Kathode, die eine hohe Verschleißbeständigkeit besitzt, anzugeben.

Die Aufgabe wird durch ein Verfahren nach Anspruch 1 gelöst. Ein Verfahren zur Herstellung eines Kathodenblocks weist die Schritte Bereitstellen von Ausgangsmaterialien, umfassend Koks und Pech, Formen des Kathodenblocks, Carbonisieren und Graphitieren, sowie Abkühlen auf. Dabei umfasst der Koks erfindungsgemäß zwei Kokssorten, die während des Carbonisierens und/oder Graphitierens und/oder Abkühlens ein unterschiedliches Volumenänderungsverhalten besitzen, wobei der beim Formen entstehende Kathodenblock ein Grünkörper ist, und der Grünkörper bis auf eine Endtemperatur in einem Bereich von 2400 bis 3000 °C aufgeheizt wird, wobei der Carbonisierschritt und anschließend Graphitierschritt erfolgen, und anschließend abgekühlt wird und wobei Pech in Mengen von 5-40 Gew.-% dazugegeben wird. Beim Graphitierschritt wird zumindest ein Anteil von Kohlenstoff im Kathodenblock in Graphit umgewandelt.

Überraschenderweise hat sich gezeigt, dass die Lebensdauer der mit einem erfindungsgemäßen Verfahren hergestellten Kathodenblöcke deutlich höher ist als bei den mit herkömmlichen Verfahren hergestellten Kathodenblöcken.

Bevorzugt besitzt ein mit einem erfindungsgemäßen Verfahren hergestellter Kathodenblock eine Rohdichte eines Kohlenstoffanteils von über 1,68 g/cm³, besonders bevorzugt von über 1,71 g/cm³, insbesondere von bis zu 1,75 g/cm³.

Vermutlich trägt eine höhere Rohdichte vorteilhaft zu einer längeren Lebensdauer bei. Dies kann zum einen darin begründet liegen, dass pro Volumeneinheit eines Kathodenblocks mehr Masse vorhanden ist, was bei einem gegebenen Masseabtrag pro Zeiteinheit zu einer höheren Restmasse nach einer gegebenen Abtragsdauer führt. Zum anderen lässt sich vermuten, dass eine höhere Rohdichte mit einer entsprechenden korrespondierenden niedrigeren Porosität eine Infiltration von Elektrolyt, das als korrosives Medium wirkt, behindert.

Vorteilhaft umfassen die zwei Kokssorten eine erste Kokssorte und eine zweite Kokssorte, wobei die erste Kokssorte während des Carbonisierens und/oder Graphitierens und/oder Abkühlens eine stärkere Schwindung und/oder Ausdehnung aufweist als die zweite Kokssorte. Hierbei ist die stärkere Schwindung und/oder Ausdehnung eine vorteilhafte Ausbildung eines unterschiedlichen Volumenänderungsverhaltens, die vermutlich besonders gut geeignet ist, zu einer stärkeren Verdichtung zu führen, als wenn Kokssorten gemischt werden, die eine gleiche Schwindung und/oder Ausdehnung besitzen. Dabei bezieht sich die stärkere Schwindung und/oder Ausdehnung auf einen beliebigen Temperaturbereich. Somit kann beispielsweise lediglich eine stärkere Schwindung des ersten Koks beim Carbonisieren vorliegen. Andererseits kann beispielsweise zusätzlich oder stattdessen eine stärkere Ausdehnung in einem Übergangsbereich zwischen Carbonisieren und Graphitieren vorliegen. Stattdessen oder zusätzlich kann sich beim Abkühlen ein unterschiedliches Volumenänderungsverhalten vorliegen.

Bevorzugt ist die Schwindung und/oder Ausdehnung der ersten Kokssorte während des Carbonisierens und/oder Graphitierens und/oder Abkühlens bezogen auf das Volumen zumindest 10 % höher als die der zweiten Kokssorte, insbesondere zumindest 25 % höher, insbesondere zumindest 50 % höher. Somit ist beispielsweise im Fall einer 10 % höheren Schwindung der ersten Kokssorte die Schwindung von Raumtemperatur bis 2000 °C bei der zweiten Kokssorte 1,0 Vol.-%, bei der ersten Kokssorte hingegen 1,1 Vol.-%.

Vorteilhafterweise ist die Schwindung und/oder Ausdehnung der ersten Kokssorte während des Carbonisierens und/oder Graphitierens und/oder Abkühlens bezogen auf das Volumen zumindest 100 % höher als die der zweiten Kokssorte, insbesondere zumindest 200 % höher, insbesondere zumindest 300 % höher. Somit ist beispielsweise im Fall einer 300 % höheren Ausdehnung der ersten Kokssorte die Ausdehnung von Raumtemperatur bis 1000 °C bei der zweiten Kokssorte 1,0 Vol.-%, bei der ersten Kokssorte hingegen 4,0 Vol.-%.

Auch der Fall, dass die erste Kokssorte eine Schwindung erfährt, die zweite Kokssorte hingegen im gleichen Temperaturintervall eine Ausdehnung, wird durch das erfindungsgemäße Verfahren umfasst. Eine um 300 % höhere Schwindung und/oder Ausdehnung umfasst somit beispielsweise auch den Fall, dass die zweite Kokssorte um 1,0 Vol.-% schwindet, die erste Kokssorte sich dagegen um 2,0 Vol.-% ausdehnt. Alternativ kann in zumindest einem beliebigen Temperaturintervall des erfindungsgemäßen Verfahrens statt der ersten Kokssorte die zweite Kokssorte eine stärkere Schwindung und/oder Ausdehnung aufweisen, wie oben für die erste Kokssorte beschrieben.

Bevorzugt ist zumindest eine der beiden Kokssorten ein Petrol- oder Steinkohlenteerpechkoks.

Bevorzugt beträgt der Mengenanteil in Gewichtsprozent der zweiten Kokssorte an der Gesamtmenge an Koks zwischen 50 % und 90 %, insbesondere zwischen 50 und 80 %. In diesen Mengenbereichen wirkt sich das unterschiedliche Volumenänderungsverhalten der ersten und zweiten Kokssorte vermutlich besonders gut auf eine Verdichtung während des Carbonisierens und/oder Graphitierens und/oder Abkühlens aus. Denkbare Mengenbereiche der zweiten Kokssorte können 50 bis 60 % sein, aber auch 60 bis 80 %, sowie 80 bis 90 %.

Vorteilhaft werden dem Koks zumindest ein weiteres kohlenstoffhaltiges Material und/oder Additive zugegeben. Dies kann sowohl hinsichtlich der Verarbeitbarkeit des Koks als auch der späteren Eigenschaften des hergestellten Kathodenblocks vorteilhaft sein.

Bevorzugt enthält das weitere kohlenstoffhaltige Material graphithaltiges Material; insbesondere besteht das weitere kohlenstoffhaltige Material aus graphithaltigem Material, wie etwa Graphit. Der Graphit kann synthetischer und/oder natürlicher Graphit sein. Durch derartiges weiteres kohlenstoffhaltiges Material wird erreicht, dass die notwendige Schwindung der Kathodenmasse, die durch den Koks dominiert wird, verringert wird.

Vorteilhaft liegt das kohlenstoffhaltige Material bezogen auf die Gesamtmenge aus Koks und kohlenstoffhaltigem Material zu 1 bis 40 Gew-.%, insbesondere zu 5 bis 30 Gew.-% vor.

Zusätzlich zu der Menge an Koks und gegebenenfalls kohlenstoffhaltigem Material, die insgesamt 100 Gew.-% darstellt, wird Pech in Mengen von 5 bis 40 Gew.-%, insbesondere 15 bis 30 Gew.-% (bezogen auf das Gewicht der gesamten Grünmischung) zugegeben. Pech wirkt als Bindemittel und dient dazu, während des Carbonisierens einen formstabilen Körper zu erzeugen.

Vorteilhafte Additive können Öl, wie Presshilfsöl, oder Stearinsäure sein. Diese erleichtern ein Mischen des Kokses und gegebenenfalls der weiteren Komponenten. Vorteilhaft wird der Kathodenblock als Mehrfachschichtblock hergestellt, wobei eine erste Schicht als Ausgangsmaterialien Koks und gegebenenfalls ein weiteres kohlenstoffhaltiges Material enthält und eine zweite Schicht als Ausgangsmaterialien Koks und ein Hartmaterial, insbesondere TiB₂, sowie gegebenenfalls eine weiteres kohlenstoffhaltiges Material enthält. Hartmaterial wird auch als RHM (refractory hard material) bezeichnet. Das weitere kohlenstoffhaltige Material kann wie oben für einen monolithischen Kathodenblock beschrieben vorliegen. Mit dieser Variante eines Mehrfachschichtblocks werden die Vorteile eines Mehrfachschichtblocks, bei dem die der Aluminiumschmelze zugewandte Schicht ein Hartmaterial enthält, mit der Verwendung zweier Kokssorten mit unterschiedlichem Volumenänderungsverhalten kombiniert. Da die zweite Schicht wegen des Zusatzes an hochtemperaturbeständigem Hartmaterial nach einem Graphitieren immer eine hohe Rohdichte von beispielsweise über 1,82 g/cm³ aufweist, ist es vorteilhaft, wenn die erste Schicht nach einem Graphitieren ebenfalls eine hohe Rohdichte von vorteilhafterweise über 1,68 g/cm³ aufweist. Die geringen Unterschiede im thermischen Ausdehnungsverhalten und Rohdichten während der Wärmebehandlungsschritte verringern Produktionszeiten und Ausschussraten der Kathodenblöcke, da starke Unterschiede in den Schichten während einer Temperaturbehandlung zu thermischen Spannungen führen können. Des Weiteren ist daher vorteilhafterweise die Beständigkeit gegenüber thermischen Spannungen und daraus resultierenden Schädigungen in der Anwendung ebenfalls erhöht.

Bevorzugt wird zumindest eine der beiden Schichten mit einer Rohdichte eines Kohlenstoffanteils von über 1,68 g/cm³ hergestellt. Je nach Wunsch und/oder Bedarf können somit beide Schichten oder eine der beiden Schichten erfindungsgemäß mit zwei unterschiedlichen Kokssorten hergestellt werden. Somit ergibt sich die Möglichkeit, Rohdichten und Rohdichteverhältnisse einzustellen, wie nötig oder gewünscht. Beispielsweise kann ausschließlich die erste Schicht erfindungsgemäß mit zwei Kokssorten hergestellt werden, während die zweite Schicht mit lediglich einer Kokssorte hergestellt wird, aber zusätzlich TiB₂ als keramischer Hartstoff enthält.

Gegebenenfalls kann es vorteilhaft sein, dass der Mehrfachschichtblock mehr als zwei Schichten aufweist. In diesem Fall kann von den mehr als zwei Schichten eine beliebige Anzahl der Schichten erfindungsgemäß jeweils mit zwei Kokssorten unterschiedlichen Volumenänderungsverhaltens hergestellt werden.

Vorteilhaft kann die zweite Schicht eine Höhe besitzen, die 10 bis 50 %, insbesondere 15 bis 45 %, der Gesamthöhe des Kathodenblocks beträgt. Eine geringe Höhe der zweiten Schicht, wie etwa 20 %, kann vorteilhaft sein, da eine geringe Menge an kostenintensiverem hartkeramischen Material nötig ist. Alternativ kann eine große Höhe der zweiten Schicht, wie etwa 40 %, vorteilhaft sein, da eine Schicht, die hartkeramisches Material besitzt, eine hohe Verschleißbeständigkeit besitzt. Je größer die Höhe dieses hoch verschleißfesten Materials in Bezug auf die Gesamthöhe des Kathodenblocks, desto höher die Verschleißfestigkeit des gesamten Kathodenblocks.

Die Erfindung wird des Weiteren mit einem Kathodenblock gemäß Anspruch 15 gelöst. Der Kathodenblock ist vorteilhaft mit einem erfindungsgemäßen Verfahren hergestellt. Erfindungsgemäß ist die Rohdichte größer als 1,68 g/cm³, insbesondere größer als 1,70 g/cm³, insbesondere zumindest größer als 1,71 g/cm³, insbesondere bis zu 1,75 g/cm³. Dabei ist die Rohdichte auf die gesamte Schicht bezogen, wenn kein feuerfestes Hartmaterial zugesetzt ist, also auf den reinen Kohlenstoffanteil. Für den Fall, dass die Schicht hartkeramisches Material, wie TiB₂, enthält, ist die Rohdichte eine rechnerische Rohdichte der Schicht ohne den Anteil an feuerfestem Hartmaterial.

Weitere vorteilhafte Aus- und Weiterbildungen der Erfindung werden im Folgenden anhand eines bevorzugten Ausführungsbeispiels und der Figuren erläutert.

Dabei zeigt:
- Fig. 1:: eine Dilatometer-Messkurve als Funktion der Temperatur einer ersten und einer zweiten Kokssorte für das erfindungsgemäße Verfahren,
- Fig. 2:: eine schematische Darstellung der Formgebung eines erfindungsgemäßen Kathodenblocks als Mehrfachschichtblock.

Zur Herstellung eines erfindungsgemäßen Kathodenblocks werden ein erster und ein zweiter Koks getrennt voneinander gemahlen, in Korngrößenfraktionen getrennt und miteinander mit Pech vermischt. Der Gewichtsanteil des ersten Kokses an der Gesamtmenge Koks kann beispielsweise 10 bis 20 Gew.-% oder 40 bis 45 Gew.-% betragen. Ein Kathodenblock kann aus der Grünmischung durch Extrudieren hergestellt werden. Alternativ kann die Mischung beispielsweise in eine Form, die weitgehend der späteren Form der Kathodenblöcke entspricht, eingefüllt und vibrationsverdichtet oder blockgepresst werden. Der entstehende Grünkörper wird bis auf eine Endtemperatur in einem Bereich von 2400 bis 3000 °C aufgeheizt, wobei ein Carbonisierschritt und anschließend ein Graphitierschritt erfolgen, und anschließend abgekühlt. Der entstehende Kathodenblock besitzt eine Rohdichte von 1,71 g/cm³ und eine sehr hohe Verschleißbeständigkeit gegenüber flüssigem Aluminium und Kryolith.

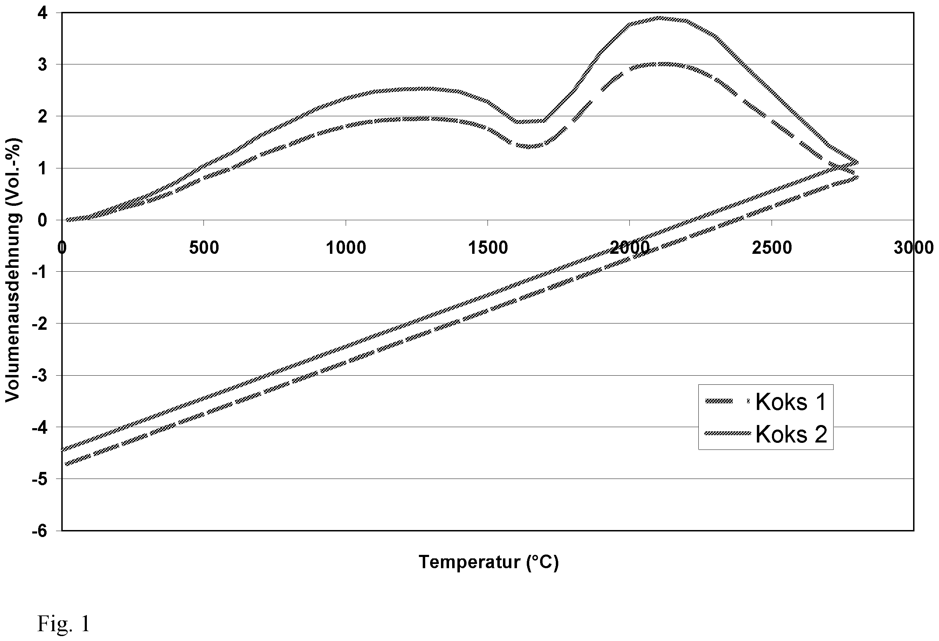

Fig. 1 zeigt eine Dilatometer-Messkurve der ersten Kokssorte (mit gestrichelt dargestellter Linie) während des Graphitierungsvorgangs. Fig. 1 zeigt des Weiteren eine entsprechende Messkurve (mit durchgezogen dargestellter Linie) für die zweite Kokssorte. Es ist zu sehen, dass beide Kokssorten unterschiedliche Volumenänderungsverhalten besitzen.

Der erste Koks aus Fig. 1 zeigt ausgehend von einer Nulllinie zu Beginn des Temperaturprogramms bis zu einer Temperatur von 2800 °C zunächst eine Ausdehnung, wobei bis ca. 1200 °C ein Volumenanstieg zu beobachten ist und nach ca. 1400 °C eine vorübergehende Verringerung des Volumens auftritt. Bis ca. 2100 °C ist anschließend gegenüber dem Ausgangsvolumen eine maximale Volumenzunahme zu sehen.

Bei der Dilatometermessung des zweiten Kokses ist ein prinzipiell ähnlicher Kurvenverlauf wie beim ersten Koks zu beobachten, wobei die gesamte Kurve insgesamt stärker ansteigt. Entsprechend ist bei ca. 2100 °C bei dem zweiten Koks ebenfalls eine maximale Volumenzunahme zu erkennen, die jedoch deutlich niedriger ist als beim ersten Koks.

Erst beim anschließenden Abkühlen tritt bei beiden Kokssorten eine Schwindung auf, die bei der zweiten Kokssorte stärker ausfällt als bei der ersten.

Alternativ werden zwei Kokssorten eingesetzt, von denen die erste bereits während der Aufheizphase im Carbonisier- und/oder Graphitierschritt eine Schwindung besitzen. Die zweite der beiden Kokssorten besitzt eine deutlich stärkere Schwindung (bezogen auf die Schwindung nach Carbonisieren, Graphitieren und Abkühlen gegenüber dem Ausgangsvolumen) als die andere Kokssorte.

In einer weiteren Variante des Ausführungsbeispiels wird der Koksmischung Graphitpulver oder Kohlenstoffpartikel zugegeben.

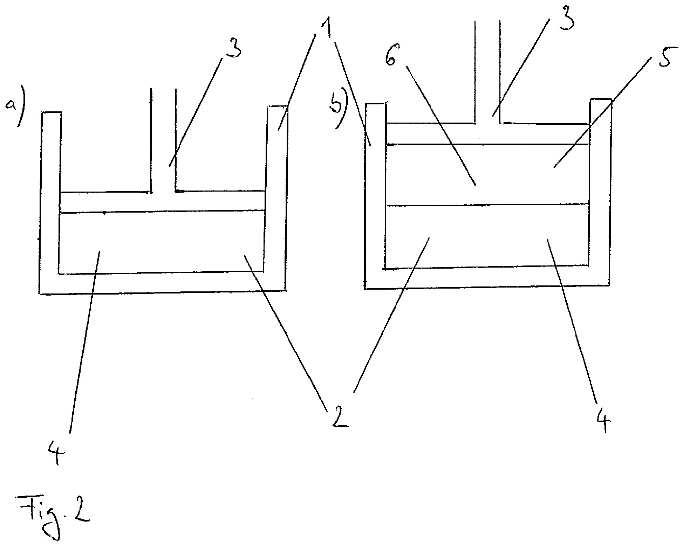

In einer weiteren Variante des Ausführungsbeispiel wird eine Form 1 zunächst teilweise mit einer Mischung 2 aus den zwei Kokssorten, Graphit und TiB₂ gefüllt und vibrationsverdichtet, wie in Fig. 2a) angedeutet. Anschließend wird auf die sich ergebende Ausgangsschicht 4, die bei der späteren Kathode die obere Schicht darstellt, die den Anoden zugewandt ist und somit direkten Kontakt mit der Aluminiumschmelze haben wird, eine Mischung 5 aus den zwei Kokssorten und Graphit gefüllt und wiederum verdichtet (siehe Fig. 2b). Die sich ergebende obere Ausgangsschicht 6 stellt bei der späteren Kathode die untere Schicht dar, die von der Anode abgewandt ist. Dieser Zweischichtenblock wird wie beim ersten Ausführungsbeispiel carbonisiert und graphitiert.

Alle in der Beschreibung, den Beispielen und Ansprüchen genannten Merkmale können in beliebiger Kombination zu der Erfindung beitragen. Die Erfindung beschränkt sich nicht auf die angegebenen Beispiele, sondern kann auch in Abwandlungen ausgeführt werden, die hier nicht konkret beschrieben sind. Insbesondere werden mit unterschiedlichen Volumenänderungsverhalten auch andere Arten von Verhalten als Schwindungsverhalten umfasst. Beispielsweise kann zumindest in Abschnitten des Aufheiz- und Abkühlzyklus eine Volumenzunahme vorteilhaft für ein Verdichten der Kathoden sein. So können zwei Kokssorten unter die Erfindung fallen, die nach Carbonisieren, Graphitieren und Abkühlen letztendlich die gleiche Schwindung aufweisen, aber bei einer Zwischentemperatur unterschiedliche Schwindung oder Volumenzunahme aufweisen.

Unter unterschiedlichen Kokssorten können außer Kokssorten unterschiedlicher Hersteller auch Kokse gleicher Hersteller, aber unterschiedlicher Vorbehandlung fallen, wie etwa unterschiedlich calcinierte Kokse.

## Patentansprüche

1. Verfahren zur Herstellung eines Kathodenblocks, aufweisend die Schritte Bereitstellen von Ausgangsmaterialien, umfassend Koks und Pech, Formen des Kathodenblocks, Carbonisieren und Graphitieren, sowie Abkühlen, wobei der beim Formen entstehende Kathodenblock ein Grünkörper ist, und der Grünkörper bis auf eine Endtemperatur in einem Bereich von 2400 bis 3000 °C aufgeheizt wird, wobei der Carbonisierschritt und anschließend Graphitierschritt erfolgen, und anschließend abgekühlt wird, wobei Pech in Mengen von 5 - 40 Gew.-% dazugegeben wird, **dadurch gekennzeichnet, dass** der Koks zwei Kokssorten umfasst, die während des Carbonisierens und/oder Graphitierens und/oder Abkühlens ein unterschiedliches Volumenänderungsverhalten besitzen.

2. Verfahren nach Anspruch 1, **dadurch gekennzeichnet, dass** der Kathodenblockmit einer Rohdichte von über 1,68 g/cm³ erhalten wird.

3. Verfahren nach Anspruch 1 oder 2, **dadurch gekennzeichnet, dass** der Kathodenblock mit einer Rohdichte des Kohlenstoffanteils von über 1,71 g/cm³, insbesondere von bis zu 1,75 g/cm³ erhalten wird.

4. Verfahren nach einem oder mehreren der Ansprüche 1 bis 3, **dadurch gekennzeichnet, dass** die zwei Kokssorten eine erste Kokssorte und eine zweite Kokssorte umfassen, wobei die erste Kokssorte während des Carbonisierens und/ oder Graphitierens und/oder Abkühlens eine stärkere Schwindung und/oder Ausdehnung aufweist als die zweite Kokssorte.

5. Verfahren nach Anspruch 4, **dadurch gekennzeichnet, dass** die Schwindung und/oder Ausdehnung der ersten Kokssorte während des Carbonisierens und/ oder Graphitierens und/oder Abkühlens bezogen auf das Volumen zumindest 10 % größer ist als die der zweiten Kokssorte, insbesondere zumindest 25 % größer, insbesondere zumindest 50 % größer.

6. Verfahren nach Anspruch 4 oder 5, **dadurch gekennzeichnet, dass** die Schwindung und/oder Ausdehnung der ersten Kokssorte während des Carbonisierens und/oder Graphitierens und/oder Abkühlens bezogen auf das Volumen zumindest 100 % größer als die der zweiten Kokssorte, insbesondere zumindest 200 % größer, insbesondere zumindest 300 % größer.

7. Verfahren nach einem oder mehreren der Ansprüche 1 bis 6, **dadurch gekennzeichnet, dass** der Mengenanteil in Gewichtsprozent der zweiten Kokssorte an der Gesamtmenge an Koks zwischen 50 % und 90 % beträgt.

8. Verfahren nach einem oder mehreren der Ansprüche 1 bis 7, **dadurch gekennzeichnet, dass** dem Koks ein weiteres kohlenstoffhaltiges Material und/oder Additive zugegeben werden.

9. Verfahren nach Anspruch 8, **dadurch gekennzeichnet, dass** das weitere kohlenstoffhaltige Material graphithaltiges Material enthält, insbesondere aus graphithaltigem Material besteht.

10. Verfahren nach Anspruch 8 oder 9, **dadurch gekennzeichnet, dass** das weitere kohlenstoffhaltige Material bezogen auf die Gesamtmenge an Koks und weiterem kohlenstoffhaltigem Material zu 1 bis 40 Gew.- %, insbesondere zu 5 bis 30 Gew. -%, vorliegt.

11. Verfahren nach Anspruch 1, **dadurch gekennzeichnet, dass** Pech in Mengen von 15 bis 30 Gew.-% zugegeben wird.

12. Verfahren nach einem oder mehreren der Ansprüche 1 bis 11, **dadurch gekennzeichnet, dass** der Kathodenblock als Mehrfachschichtblock hergestellt wird, wobei eine erste Schicht als Ausgangsmaterial Koks und gegebenenfalls ein weiteres kohlenstoffhaltiges Material enthält und eine zweite Schicht als Ausgangsmaterial Koks und ein feuerfestes Hartmaterial, insbesondere TiB₂, und gegebenenfalls ein weiteres kohlenstoffhaltige Material enthält.

13. Verfahren nach Anspruch 12, **dadurch gekennzeichnet, dass** der Koks der ersten und/oder der zweiten Schicht zwei Kokssorten umfasst, die mit einem unterschiedlichen Volumenänderungsverhalten während des Carbonisierens und/oder Graphitierens und/oder Abkühlens zu einer Verdichtung des entstehenden Graphits von über 1,70 g/cm³ führen.

14. Verfahren nach Anspruch 12 oder 13, **dadurch gekennzeichnet, dass** die zweite Schicht eine Höhe besitzt, die 10 bis 50 %, insbesondere 15 bis 45 %, der Gesamthöhe des Kathodenblocks beträgt.

## Claims

1. Method for producing a cathode block, having the steps of providing starting materials, comprising coke and pitch, forming the cathode block, carbonising and graphitising, and cooling, the cathode block resulting during forming being a green body, and the green body being heated to a final temperature in a range of from 2,400 to 3,000°C, the carbonisation step and subsequently the graphitisation step taking place, and subsequently being cooled, pitch being added thereto in amounts of 5 to 40 wt.%, **characterised in that** the coke comprises two coke types which have different volume-change properties during carbonisation and/or graphitisation and/or cooling.

2. Method according to claim 1, **characterized in that** the cathode block is obtained having a bulk density of over 1.68 g/cm³

3. Method according to either claim 1 or claim 2, **characterised in that** the cathode block is obtained having a bulk density of the carbon portion of over 1.71 g/cm³, in particular up to 1.75 g/cm³.

4. Method according to one or more of claims 1 to 3, **characterised in that** the two coke types comprise a first coke type and a second coke type, the first coke type exhibiting greater shrinkage and/or expansion than the second coke type during carbonisation and/or graphitisation and/or cooling.

5. Method according to claim 4, **characterised in that** the shrinkage and/or expansion of the first coke type during carbonisation and/or graphitisation and/or cooling is at least 10% greater than that of the second coke type based on the volume, in particular at least 25% greater, in particular at least 50% greater.

6. Method according to either claim 4 or claim 5, **characterised in that** the shrinkage and/or expansion of the first coke type during carbonisation and/or graphitisation and/or cooling is at least 100% greater than that of the second coke type based on the volume, in particular at least 200% greater, in particular at least 300% greater.

7. Method according to one or more of claims 1 to 6, **characterised in that** the proportion of the second coke type in the total amount of coke in percent by weight is between 50% and 90%.

8. Method according to one or more of claims 1 to 7, **characterised in that** a further carbon-containing material and/or additives are added to the coke.

9. Method according to claim 8, **characterized in that** the further carbon-containing material contains graphite-containing material, in particular consists of graphite-containing material.

10. Method according to either claim 8 or claim 9, **characterised in that** the further carbon-containing material is present at 1 to 40 wt.%, in particular at 5 to 30 wt.%, based on the total amount of coke and further carbon-containing material.

11. Method according to claim 1, **characterised in that** pitch is added in amounts of 15 to 30 wt.%.

12. Method according to one or more of claims 1 to 11, **characterised in that** the cathode block is produced as a multi-layer block, a first layer containing coke and optionally a further carbon-containing material as starting materials, and a second layer containing coke and a fire-resistant hard material, in particular TiB₂, and optionally a further carbon-containing material as starting materials.

13. Method according to claim 12, **characterised in that** the coke of the first and/or second layer comprises two coke types which, having different volume-change properties during carbonisation and/or graphitisation and/or cooling, lead to a compaction of the resulting graphite of over 1.70 g/cm³.

14. Method according to either claim 12 or claim 13, **characterised in that** the second layer is of a height which is 10 to 50%, in particular 15 to 45%, of the total height of the cathode block.

## Revendications

1. Procédé de fabrication d'un bloc cathode, présentant les étapes de préparation de matériaux initiaux, comprenant du coke et de la résine, de mise en forme du bloc cathode, de carbonisation et de graphitisation, ainsi que de refroidissement, où le bloc cathode produit lors de la mise en forme est un corps vert, et le corps vert est chauffé jusqu'à une température finale comprise dans une plage de 2 400 à 3 000°C, où se succèdent l'étape de carbonisation, l'étape de graphitisation puis l'étape de refroidissement, de la résine étant ajoutée à hauteur de 5 à 40 % en poids, **caractérisé en ce que** le coke comprend deux types de coke qui possèdent un comportement de changement de volume différent pendant la carbonisation et/ou la graphitisation et/ou le refroidissement.

2. Procédé selon la revendication 1, **caractérisé en ce que** le bloc cathode est obtenu avec une masse volumique apparente supérieure à 1,68 g/cm³.

3. Procédé selon la revendication 1 ou 2, **caractérisé en ce que** le bloc cathode est obtenu avec une masse volumique apparente de la portion de carbone supérieure à 1,71 g/cm³, en particulier inférieure ou égale à 1,75 g/cm³,

4. Procédé selon une ou plusieurs des revendications 1 à 3, **caractérisé en ce que** les deux types de coke comprennent un premier type de coke et un second type de coke, le premier type de coke présentant un plus fort rétrécissement et/ou une plus forte expansion pendant la carbonisation et/ou la graphitisation et/ou le refroidissement que le second type de coke,

5. Procédé selon la revendication 4, **caractérisé en ce que** le rétrécissement et/ou l'expansion du premier type de coke est au moins 10 % supérieur, rapporté au volume, pendant la carbonisation et/ou la graphitisation et/ou le refroidissement, à celui du second type de coke, en particulier au moins 25 % supérieur, en particulier au moins 50 % supérieur.

6. Procédé selon la revendication 4 ou 5, **caractérisé en ce que** le rétrécissement et/ou l'expansion du premier type de coke pendant la carbonisation et/ou la graphitisation et/ou le refroidissement, rapporté au volume, est au moins 100 % supérieur à celui du second type de coke, en particulier au moins 200 % supérieur, en particulier au moins 300 % supérieur.

7. Procédé selon une ou plusieurs des revendications 1 à 6, **caractérisé en ce que** le rapport, en pourcentage en poids, du second type de coke sur la quantité totale de coke est compris entre 50 % et 90 %.

8. Procédé selon une ou plusieurs des revendications 1 à 7, **caractérisé en ce qu'**un autre matériau contenant du carbone et/ou des additifs sont ajoutés au coke.

9. Procédé selon la revendication 8, **caractérisé en ce que** l'autre matériau contenant du carbone contient un matériau contenant du graphite, en particulier se compose de matériau contenant du graphite.

10. Procédé selon la revendication 8 ou 9, **caractérisé en ce que** l'autre matériau contenant du carbone est présent à hauteur, rapporté à la quantité totale de coke et dudit autre matériau contenant du carbone, à hauteur de 1 à 40 % en poids, en particulier de 5 à 30 % en poids.

11. Procédé selon la revendication 1, **caractérisé en ce que** la résine est ajoutée à hauteur de 15 à 30 % en poids.

12. Procédé selon une ou plusieurs des revendications 1 à 11, **caractérisé en ce que** le bloc cathode est fabriqué sous forme d'un bloc en plusieurs couches, où une première couche contient comme matériau initial du coke et éventuellement un autre matériau contenant du carbone, et une seconde couche contient comme matériau initial du coke et un matériau dur ignifuge, en particulier TiB₂, et éventuellement un autre matériau contenant du carbone.

13. Procédé selon la revendication 12, **caractérisé en ce que** le coke de la première et/ou de la seconde couche contient deux types de coke qui, avec un comportement de changement de volume différent pendant la carbonisation et/ou la graphitisation et/ou le refroidissement, entraînent une compression du graphite obtenu jusqu'à plus de 1,70 g/cm³,

14. Procédé selon la revendication 12 ou 13, **caractérisé en ce que** la seconde couche a une hauteur représentant 10 à 50 %, en particulier 15 à 45 % de la hauteur totale du bloc cathode.
